# EUROPÄISCHE PATENTSCHRIFT

(11) **EP 1 508 036 B1**
(45) Veröffentlichungstag und Bekanntmachung des Hinweises auf die Patenterteilung: **17.01.2007**
(21) Anmeldenummer: 03752698.5
(22) Anmeldetag: 14.05.2003
(51) Int. Cl.: G01N 27/407, G01K 1/08

(54) **SAUERSTOFF- ODER TEMPERATURSENSOR, DESSEN GEHÄUSEHÜLSE ZUR VERMINDERUNG DER STOSSEMPFINDLICHEIT MIT SCHAUM GEFÜLLT IST**
OXYGEN OR TEMPERATURE SENSOR, THE HOUSING COVER OF WHICH IS FILLED WITH FOAM FOR REDUCING SUSCEPTIBILITY TO SHOCK
SONDE D'OXYGENE OU DE TEMPERATURE, DONT LE MANCHON EST REMPLI DE MOUSSE POUR DIMINUER LA SENSIBILITE AUX CHOCS

(30) Priorität: 17.05.2002 DE 10222567; 23.12.2002 DE 10260842
(43) Veröffentlichungstag der Anmeldung: 23.02.2005
(73) Patentinhaber: ROBERT BOSCH GMBH, 70442 Stuttgart (DE)
(72) Erfinder: WEYL, Helmut, 71701 Schwieberdingen (DE); MEIER, Frank, 70806 Kornwestheim (DE); DETTLING, Peter, 71336 Waiblingen (DE); SCHNEIDER, Bettina, 70563 Stuttgart (DE)
(86) Internationale Anmeldenummer: PCT/DE2003/001549
(87) Internationale Veröffentlichungsnummer: WO 2003/098203

(56) Entgegenhaltungen:
- EP-A- 1 037 039
- DE-A- 4 126 378
- DE-A- 19 706 208
- DE-C- 10 115 704
- US-A- 4 277 439
- US-A- 5 144 249

## Beschreibung

### Stand der Technik

Die Erfindung geht aus von einem Meßfühler zur Messung einer physikalischen Eigenschaft eines Meßgases, insbesondere der Sauerstoffkonzentration oder der Temperatur im Abgas einer Brennkraftmaschine in einem Kraftfahrzeug, nach dem Oberbegriff des Anspruchs 1.

Ein Meßfühler ist beispielsweise aus der DE 41 26 378 A1 oder DE 195 42 650 A1 bekannt. Das in planarer Schichttechnik aufgebaute Meßelement, wie es beispielsweise in der DE 199 41 051 A1 beschrieben ist, trägt auf seinem aus dem Gehäuse vorstehenden, anschlußseitigen Endabschnitt elektrisch leitfähige Kontaktflächen, die von dem Verbindungsstecker kontaktiert werden. Der Verbindungsstecker besteht aus zwei Kontaktteil-Trägern, die auf voneinander abgekehrten Seiten des Endabschnitts des Meßelements an diesen angedrückt werden und dabei mit je einem Kontaktteil auf den Kontaktflächen aufliegen. Zur Sicherstellung einer guten elektrischen Kontaktierung werden die beiden Kontaktteil-Träger mittels einer die beiden Kontaktteil-Träger außen umschließenden Klemmfeder auf den Endabschnitt des Meßelements aufgepreßt. Die aus streifenförmigem Blech bestehenden Kontaktteile sind über die Kontaktteil-Träger hinaus verlängert und bilden Verbindungsstellen für Anschlußkabel, wobei jeweils ein Kontaktteil mit einem Anschlußkabel vercrimpt ist. Die Crimpstellen liegen innerhalb eines die Gehäusehülse abschließenden Formkörpers, durch den die Anschlußkabel hindurchgeführt sind.

Ein Messfühler, der weilgehend dem Oberbegriff des Anspruchs 1 entspricht, ist in Fig. 2 von EP 1037039 offenbart.

Dass dort ein im Inneren der Gehäusehülse vorhandener Freiraum Vollständug mit einem Werkstoff aufgefüllt ist, hat den Vorteil einer großen Robustheit, die mechanische und elektrische Schädigungen des Meßfühlers auch unter extremen Einsatzbedingungen des Kraftfahrzeugs, wie z.B. Hochgeschwindigkeitsrennen und Off-Road-Betrieb, nicht entstehen läßt. Durch die Auffüllung des um den Verbindungsstecker herum vorhandenen Freiraums mit einem Werkstoff werden auch extreme Schüttelbelastungen und Schwingungsbeschleunigungen am Verbindungsstecker gut gedämpft und damit Brüche im Bereich der elektrisch-mechanischen Kontaktierung, z.B. der Kontaktteile, Kontaktträger und/oder der Klemmfeder, verhindert.

### Vorteile der Erfindung:

Erfindungsgemäß ist der Werkstoff ein temperaturbeständiger, poröser Schaum. Ein solcher Schaum hat den Vorteil, daß er nicht so hart ist, daß Verspannungen an dem Bauteil auftreten, die zum Bruch des Meßelements führen könnten. Seine Härte läßt sich z.B. durch die Menge des in den Freiraum eingefüllten schaumbildenden Materials einstellen. Der Schaum besitzt im Gegensatz zu keramischen Vergußmassen eine ausreichende Permeabilität für Sauerstoff, so daß ein solcher Meßfühler insbesondere als Grenzstromsonde mit gepumpter Referenz eingesetzt werden kann.

Gemäß einer vorteilhaften Ausführungsform der Erfindung wird als schaumbildendes Material Orthokieselsäure (H₄SiO₄) verwendet, deren Moleküle unter Wasserabspaltung und Bildung von Siliziumoxid-Kettenmolekülen eine koloidale Struktur annehmen. Durch Erhitzung auf Temperaturen größer 100°C wird das noch vorhandene Wasser verdampft und bläht dabei den Schaum auf. Übrig bleibt ein aus Siliziumoxid (SiO₂) bestehender Schaum, dessen Porösität durch den Austrocknungsgrad bzw. Wassergehalt der koloidalen Lösung beeinflußt werden kann. Hierbei bewirkt ein niedriger Restwassergehalt eine kleine Porösität und eine entsprechend höhere Festigkeit des Schaums.

Gemäß einer vorteilhaften Ausführungsform der Erfindung ist das vom Gehäuse abgekehrte Hülsenende der Gehäusehülse mit einem Formkörper abgeschlossen und in der Gehäusehülse eine oberhalb des Verbindungssteckers und eine unterhalb des Verbindungssteckers liegende radiale Bohrung angeordnet. Die untere Bohrung dient zum Einbringen des schaumbildenden Materials in das Gehäuseinnere, wobei durch die Größe der Bohrung ebenfalls die Porengröße bzw. die Festigkeit des entstehenden Schaums sich beeinflussen läßt. Nach Einfüllen des aufschäumenden Material wird die untere Bohrung verschlossen, z.B. zugeschweißt. Die obere Bohrung dient zum Austritt des verdampfenden Wassers während des Ausheizungsprozesses sowie zur optischen Kontrolle, daß der Freiraum vollständig ausgeschäumt ist.

### Zeichnung

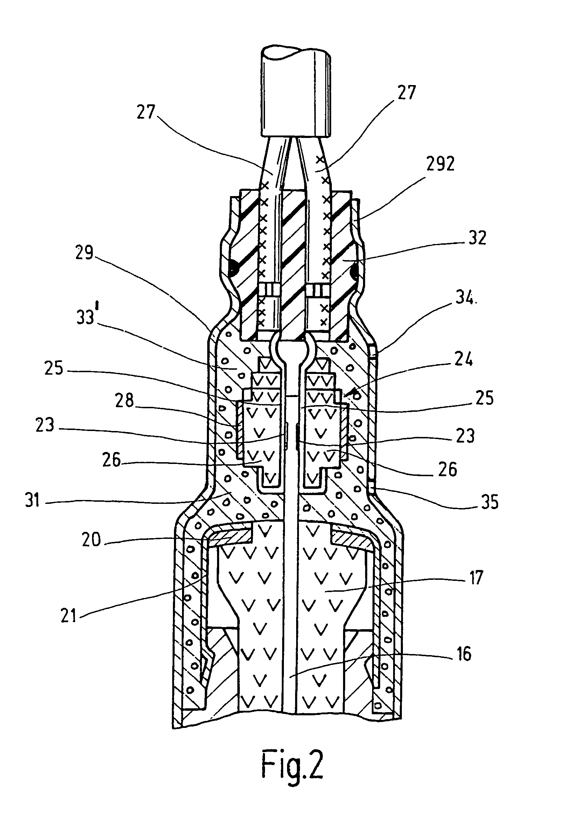

Die Erfindung ist anhand des in der Figur 2 dargestellten Ausführungsbeispiels in der nachfolgenden Beschreibung näher erläutert. Es zeigen:
- Fig. 1: einen Längsschnitt eines Meßfühlers für die Messung der Sauerstoffkonzentration im Abgas einer Brennkraftmaschine; dieser Meßfühler stellt kein Ausführungsbeispiel der Erfindung dar;
- Fig. 2: ausschnittweise eine gleiche Darstellung wie in Fig. 1 mit der erfindungsgemäßen Modifizierung des Meßfühlers.

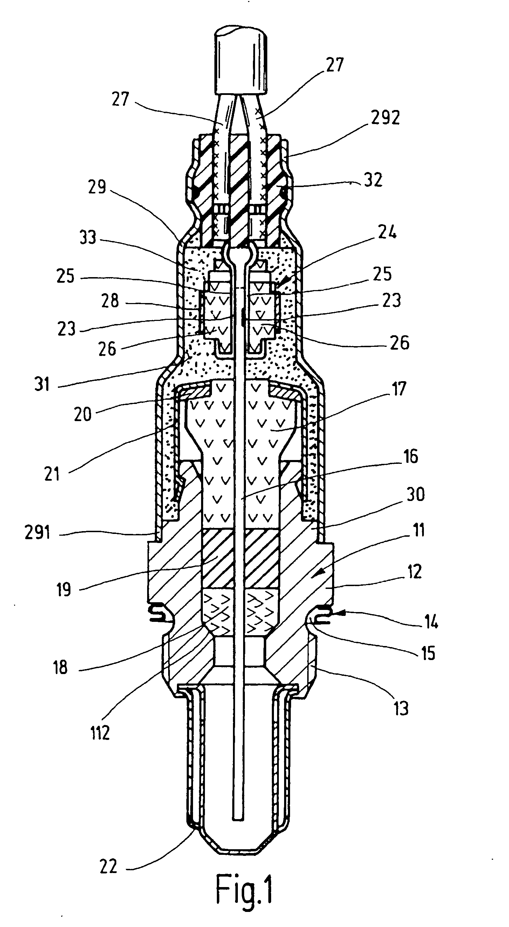

Der in Fig. 1 im Längsschnitt dargestellte Meßfühler zur Messung der Sauerstoffkonzentration im Abgas einer Brennkraftmaschine in einem Kraftfahrzeug, auch Lambdasonde genannt, als Beispiel für einen allgemeinen, nicht erfindungsgemäßen Meßfühler zur Messung einer physikalischen Eigenschaft eines Meßgases weist ein Gehäuse 11 aus Metall auf, das auf seiner Außenseite einen Sechskant 12 und ein Gewinde 13 für den Einbau des Meßfühlers in einen Abgasstutzen der mehrzylindrigen Brennkraftmaschine trägt. Für den abdichtenden Einbau des Meßfühlers in den Abgasstutzen dient ein Dichtring 14, welcher in einer Ringnut 15 im Gehäuse 11 unverlierbar festgelegt ist.

Im Gehäuse 11 ist ein elektrochemisches Meßelement 16 aufgenommen, dessen Aufbau beispielsweise in der DE 199 41 051 A1 beschrieben ist. Es ist mittig mittels eines Pakets aus zwei elektrisch isolierenden Keramikteilen 17, 18 mit dazwischenliegender Dichtung 19 radial in das Gehäuse 11 eingepreßt und axial im Gehäuse 11 verspannt und ragt mit einem meßgasseitigen Endabschnitt 161 und einem anschlußseitigen Endabschnitt 162 aus dem Gehäuse 11 heraus. Zur axialen Verspannung dient eine im Gehäuse 11 ausgebildete Abstützschulter 112 und eine Druckfeder 20, die auf dem einen Keramikteil 17 aufliegt, sowie eine die Tellerfeder 20 überspannende Haltekappe 21, die mit ihrem Kappenrand im Gehäuse 11 verrastet ist. Der gassensitive Endabschnitt 161 des Meßelements 16 ist von einem Doppelschutzrohr 22 überdeckt, das am Gehäuse 11 festgelegt ist.

Auf dem durch die Haltekappe 21 zentral hindurchtretenden, anschlußseitigen Endabschnitt 162 des Meßelements 16 sind auf voneinander abgekehrten Seiten Kontaktflächen 23 vorhanden, über die das Meßelement 16 kontaktiert wird. Hierzu dient ein Verbindungsstecker 24, der eine der Anzahl der Kontaktflächen 23 entsprechende Zahl von Kontaktteilen 25 trägt, die auf zwei keramischen Kontaktteil-Trägern 26 gehalten sind. Die als streifenförmige Bleche ausgeführten Kontaktteile 25 sind über die Kontaktteil-Träger 26 hinaus verlängert und sind an ihrem Ende mit jeweils einem Anschlußkabel 27 vercrimpt. Die am anschlußseitigen Endabschnitt 162 gegenüberliegend angeordneten Kontaktteil-Träger 16 sind außen von einer Klemmfeder 28 umschlossen, wodurch zwischen den Kontaktteilen 25 und den Kontaktflächen 23 ein ausreichend hoher Kontaktdruck hergestellt wird.

Über den den Verbindungsstecker 24 tragenden, anschlußseitigen Endabschnitt 162 des Meßelements 16 ist eine Gehäusehülse 29 geschoben, die mit ihrem einen Hülsenende 291 einen außen am Gehäuse 11 ausgebildeten Ringbund 111 übergreift und dort gasdicht, z.B. durch eine umlaufende Schweißnaht 30, festgelegt ist. Die Gehäusehülse 29 umgibt dabei den Verbindungsstecker 24 sowie die Haltekappe 21 mit radialem Abstand, so daß im Innern der Gehäusehülse 29 ein Freiraum 31 vorhanden ist. Dieser Freiraum 31 wird einerseits von der Haltekappe 21 und andererseits von einem Formkörper 32 aus Kunststoff begrenzt, der in das von dem Gehäuse 11 abgekehrte Hülsenende 292 der Gehäusehülse 29 eingeschoben und mit diesem verpreßt ist. Durch den Formkörper 32 sind die Anschlußkabel 27 so hindurchgeführt, daß die Crimpverbindungen zwischen den Kontaktteilen 25 und den Anschlußkabeln 27 noch innerhalb des Formkörpers 22 liegen.

Um den so aufgebauten Meßfühler gegenüber Schüttelbelastungen und Schwingbeschleunigungen unempfindlich zu machen, ist der Freiraum 31 mit einem Werkstoff 33 ausgefüllt, der vor Einsetzen des Formkörpers 32 in die Gehäusehülse 29 in den Freiraum 31 als Schüttgut eingefüllt wird. Als Werkstoff 33 wird ein nichtleitendes, anorganisches Material in Granulatform verwendet, beispielsweise Quarzsand, Korundgranulat, oder auch ein Kunststoffgranulat verwendet. Diese Werkstoffüllung des Freiraums 31 bewirkt eine sehr starke Dämpfung am Meßelement 16, die auch bei extremen Schüttelbelastungen oder Extrembeschleunigungen des Kraftfahrzeugs verhindert, daß Brüche im Bereich der elektrisch-mechanischen Kontaktierung, z.B. der Kontaktteil-Träger 26, der Kontaktteile 25 oder der Klemmfeder 28, auftreten.

Der in Fig. 2 im vergrößerten Ausschnitt dargestellte erfindungsgemäße Meßfühler ist gegenüber dem zu Fig. 1 beschriebenen Meßfühler insoweit modifiziert, als der in den Freiraum 31 im Innern der Gehäusehülse 29 eingefüllte Werkstoff 33' ein Schaum ist, dessen Porösität bzw. Festigkeit entsprechend angepaßt ist. Als schaumbildendes Material wird vorteilhaft Orthokieselsäure (H₄SiO₄) verwendet, deren Moleküle unter Wasserabspaltung und Bildung von 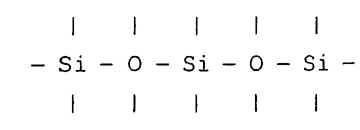 Kettenmolekülen eine koloidale Struktur annehmen. In der Gehäusehülse 29 sind zwei Bohrungen 34 und 35 eingebracht, von denen vorzugsweise die obere Bohrung 34 oberhalb des Verbindungssteckers 24 und die untere Bohrung 35 unterhalb des Verbindungssteckers 24 angeordnet ist. Durch die untere radiale Bohrung 35 wird das schaumbildende Material eingebracht, und anschließend wird die untere Bohrung 35 verschlossen. Durch Erhitzen des Meßfühlers auf eine Temperatur von größer 100°C wird das in der Orthokieselsäure vorhandene Wasser (H₂O) verdampft und bläht den sich bildenden Schaum auf. Das verdampfende Wasser tritt über die obere Bohrung 34 aus. Nach Abschluß des Ausheizprozesses ist der Freiraum 31 vollständig mit einem aus Siliziumoxid (SiO₂) bestehenden Schaum 33' ausgefüllt, dessen Porösität durch den Austrocknungsgrad beeinflußt werden kann. Will man eine höhere Festigkeit des Schaums 33' so ist ein möglichst niedriger Restwassergehalt anzustreben. Zusätzlich zur Beeinflussung des Schaums durch die Restfeuchtigkeit läßt sich die Porengröße und damit die Schaumfestigkeit sowohl durch die Menge der in den Freiraum 31 eingefüllten, koloidalen Lösung als auch durch den lichten Querschnitt der unteren Bohrung 35 beeinflussen. Die Bohrung 35 wird vorzugsweise mit einem Bohrungsdurchmesser zwischen 1 und 3mm eingebracht.

Die Erfindung ist nicht auf den beschriebenen Meßfühler zur Messung der Sauerstoffkonzentration im Abgas von Brennkraftmaschinen beschränkt. So kann auch bei Meßfühlern zur Messung der Konzentration von Stickstoffoxiden im Abgas oder bei Meßfühlern zur Messung der Temperatur des Abgases durch das Einbringen des Werkstoffs 33 bzw. 33' in den Freiraum 31 im Innern der Gehäusehülse 29 der gleiche, vorteilhafte Effekt erzielt werden.

## Patentansprüche

1. Meßfühler zur Messung einer physikalischen Eigenschaft eines Meßgases, insbesondere der Sauerstoffkonzentration oder der Temperatur im Abgas einer Brennkraftmaschine in einem Kraftfahrzeug, mit einem Gehäuse (11), mit einem im Gehäuse (11) aufgenommenen Meßelement (16), das mit einem seiner Kontaktierung dienenden Endabschnitt (162) aus dem Gehäuse (11) vorsteht, mit einem auf dem Endabschnitt (162) aufsitzenden Verbindungsstecker (24) und mit einer Endabschnitt (162) und Verbindungsstecker (24) in radialem Abstand überdeckenden Gehäusehülse (29), die mit ihrem einen Hülsenende (291) am Gehäuse (11) befestigt und an ihrem anderen Hülsenende (292) abgeschlossen ist, wobei ein im Innern der Gehäusehülse (29), um den Verbindungsstecker (24) herum vorhandener Freiraum (31) vollständig mit einem Werkstoff (33) aufgefüllt ist, **dadurch gekennzeichnet, dass** der Werkstoff (33') ein temperaturbeständiger, poröser Schaum ist.

2. Meßfühler nach Anspruch 1, **dadurch gekennzeichnet, daß** als schaumbildendes Material Orthokieselsäure (H₄SiO₄) eingesetzt ist, deren Moleküle unter Wasserabspaltung und Bildung von Siliziumoxid-Kettenmolekülen eine koloidale Struktur annehmen.

3. Meßfühler nach Anspruch 2, **dadurch gekennzeichnet, daß** das vom Gehäuse (11) abgekehrte Hülsenende (292) der Gehäusehülse (29) mit einem Formkörper (32) abgeschlossen ist, durch den die mit dem Verbindungsstecker (24) verbundenen Anschlußkabel (27) hindurchgeführt sind, und daß in der Gehäusehülse (29) eine vorzugsweise oberhalb des Verbindungssteckers (24) liegende obere, radiale Öffnung (34) und eine vorzugsweise unterhalb des Verbindungssteckers (24) liegende, dem Einbringen des schaumbildenden Materials dienende radiale Öffnung (35) angeordnet sind.

4. Meßfühler nach Anspruch 3, **dadurch gekennzeichnet, daß** die untere Bohrung (35) nach dem Einbringen des schaumbildenden Materials verschlossen, vorzugsweise zugeschweißt, ist.

5. Meßfühler nach Anspruch 3 oder 4, **dadurch gekennzeichnet, daß** der Bohrungsdurchmesser der unteren Bohrung (35) etwa 1 - 3mm beträgt.

6. Meßfühler nach einem der Ansprüche 1 - 5, **dadurch gekennzeichnet, daß** die Befestigung der Gehäusehülse (29) an dem Gehäuse (11) gasdicht, vorzugsweise durch Verschweißen des Hülsenrands mit dem Gehäuse (11), vorgenommen ist.

## Claims

1. Measuring sensor for measuring a physical property of a gas analyte, in particular the oxygen concentration or the temperature in the exhaust gas of an internal combustion engine in a motor vehicle, having a housing (11), having a measuring element (16) which is accommodated in the housing (11) and which protrudes, with an end section (162) which serves the purpose of making contact, out of the housing (11), having a connecting plug (24) which is seated on the end section (162) and having a housing sleeve (29) which covers the end section (162) and connecting plug (24) at a radial distance and is attached by one (291) of its sleeve ends to the housing (11) and is closed off at its other sleeve end (292), a free space (31) which is present around the connecting plug (24) in the interior of the housing sleeve (29) being filled completely with a material (33), **characterized in that** the material (33') is a temperature-resistant, porous foam.

2. Measuring sensor according to Claim 1, **characterized in that** orthosilicic acid (H₄SiO₄) is preferably used as a foam-forming material, the molecules of which assume a colloidal structure as they split with elimination of water and formation of silicon oxide chain molecules.

3. Measuring sensor according to Claim 2, **characterized in that** the sleeve end (292) of the housing sleeve (29) which faces away from the housing (11) is closed off with a shaped element (32) through which the connecting cables (27) which are connected to the connecting plug (24) are led, and **in that** an upper, radial opening (34) which preferably lies above the connecting plug (24) and a radial opening (35) which preferably lies below the connecting plug (24) and is used to introduce the foam-forming material are arranged in the housing sleeve (29).

4. Measuring sensor according to Claim 3, **characterized in that** the lower bore (35) is closed off, preferably closed by welding, after the introduction of the foam-forming material.

5. Measuring sensor according to Claim 3 or 4, **characterized in that** the bore diameter of the lower bore (35) is approximately 1 to 3 mm.

6. Measuring sensor according to one of Claims 1 - 5, **characterized in that** the housing sleeve (29) is attached to the housing (11) in a gas-tight fashion, preferably by welding the edge of the sleeve to the housing (11).

## Revendications

1. Capteur de mesure d'une caractéristique d'un gaz à mesurer, notamment la concentration en oxygène ou la température des gaz d'échappement d'un moteur à combustion d'un véhicule automobile, comportant un boîtier (11) logeant un élément de mesure (16) dépassant du boîtier (11) par son segment d'extrémité (162) servant à la mise en contact, et ayant un connecteur de liaison (24) installé sur le segment d'extrémité (162) ainsi qu'un manchon de boîtier (29) couvrant le segment d'extrémité (162) et le connecteur de liaison (24) en laissant un intervalle radial, ce manchon étant fixé par une extrémité (291) au boîtier (11), son autre extrémité (292) étant fermée, l'espace libre (31) à l'intérieur du manchon de boîtier (29) autour du connecteur de liaison (24) étant rempli complètement d'une matière (33),
**caractérisé en ce que**
la matière (33') est une mousse poreuse résistant à la température.

2. Capteur de mesure selon la revendication 1,
**caractérisé en ce que**
la matière formant une mousse est de l'acide orthosilicique (H₄SiO₄) dont les molécules prennent une structure colloïdale en séparant l'eau et en formant des chaînes de molécules d'oxyde de silicium.

3. Capteur de mesure selon la revendication 2,
**caractérisé en ce que**
l'extrémité (292) du manchon (29) à l'opposé du boîtier (11) est fermée par un organe moulé (32) traversé par les câbles de raccordement (27) reliés au connecteur de liaison (24), et
le manchon de boîtier (29) comporte une ouverture radiale (34), supérieure située de préférence au-dessus du connecteur (24) et une ouverture radiale (35) située de préférence sous le connecteur (24) pour introduire la matière formant une mousse.

4. Capteur de mesure selon la revendication 3,
**caractérisé en ce que**
le perçage inférieur (35) est fermé après introduction de la matière formant la mousse, de préférence il est fermé par soudage.

5. Capteur de mesure selon l'une quelconque des revendications 3 ou 4,
**caractérisé en ce que**
le diamètre du perçage inférieur (35) est de l'ordre de 1-3 mm.

6. Capteur de mesure selon l'une quelconque des revendications 1 à 5,
**caractérisé en ce que**
la fixation du manchon (29) au boîtier (11) est faite de manière étanche au gaz, de préférence par soudage du bord du manchon au boîtier (11).
